# EUROPÄISCHE PATENTSCHRIFT

(11) **EP 3 627 117 B1**
(45) Veröffentlichungstag und Bekanntmachung des Hinweises auf die Patenterteilung: **24.02.2021**
(21) Anmeldenummer: 18195754.9
(22) Anmeldetag: 20.09.2018
(51) Int. Cl.: G01G 19/393

(54) **WÄGEVORRICHTUNG MIT KLEMMVORRICHTUNG**
WEIGHING DEVICE WITH CLAMPING DEVICE
DISPOSITIF DE PESAGE AVEC DISPOSITIF D'ATTACHE

(43) Veröffentlichungstag der Anmeldung: 25.03.2020
(73) Patentinhaber: Bizerba SE & Co. KG, 72336 Balingen (DE)
(72) Erfinder: VAUPEL, Ron, 31028 Gronau (DE)
(74) Vertreter: Manitz Finsterwald Patent- und Rechtsanwaltspartnerschaft mbB

(56) Entgegenhaltungen:
- EP-B1- 2 918 855
- DE-A1-102013 203 459
- DE-U1- 9 011 539
- DE-U1-202005 013 777

## Beschreibung

Die vorliegende Erfindung betrifft eine Wägevorrichtung, insbesondere eine Kontrollwaage oder ein Preisauszeichnungssystem, mit einem Gestell, das wenigstens einen Stab, insbesondere eine Stange mit zumindest teilweise rundem Querschnitt, aufweist, und mit wenigstens einem Klemmverbinder, insbesondere einem Kreuzklemmverbinder, zum Verbinden des Stabs mit einem weiteren Stab zum Anbauen von Zubehör an das Gestell, wobei der Klemmverbinder eine erste Aufnahme für den Stab und eine zweite Aufnahme für den weiteren Stab aufweist, wobei die erste Aufnahme zwei Klemmbacken aufweist, die starr, insbesondere ohne bewegliches Gelenk, miteinander verbunden sind und zwischen denen ein Schlitz ausgebildet ist, wobei die beiden Klemmbacken, insbesondere mittels einer Spannschraube, aufeinander zu spannbar sind, derart, dass der Stab in der ersten Aufnahme verklemmbar ist.

Eine derartige Wägevorrichtung ist beispielsweise aus dem Dokument DE 10 2013 203 459 A1 bekannt. Bei der Wägevorrichtung kann es sich um eine Kontrollwaage handeln, die auch als Checkweigher bezeichnet wird, bei der ein Wägeband auf einer Wägezelle abgestützt ist und die innerhalb von Produktionsprozessen zur Gewichtskontrolle eingesetzt wird. Die dabei gewonnenen Daten können im Rahmen einer Inline-Prozesskontrolle sofort ausgewertet werden, beispielsweise um Stückgut zu sortieren und/oder Fehlgewichte auszusortieren. Um einen möglichst hohen Durchsatz zu erreichen, werden dynamische Kontrollwaagen eingesetzt, bei denen das zu wiegende Stückgut im Durchlauf gewogen wird, d.h. die Messungen werden vorgenommen, während sich das Stückgut aufgrund einer kontinuierlichen Bewegung des Wägebands ohne Stopp über die zugeordnete Wägezelle hinweg bewegt. Vor dem Wägeband ist ein Zuführband angeordnet, um dem Wägeband das Stückgut zuzuführen. Nach dem Wägeband ist ein Abführband angeordnet, beispielsweise mit seitlichem Pusher oder ein Kippband, um ein Sortieren bzw. Aussortieren des Stückguts anhand der Messergebnisse der Wägezelle durchzuführen. Bei der Wägevorrichtung kann es sich aber auch um ein Preisauszeichnungssystem handeln, mit dem ungleichgewichtige Waren dynamisch gewogen und etikettiert werden.

Derartige Wägevorrichtungen weisen üblicherweise ein Gestell auf, welches fest auf dem Boden steht und die gesamte Anordnung stabil hält. An diesem Gestell können dann Zuführbänder, Abführbänder, Wägebänder, Ausscheideboxen, Pusher usw. befestigt werden. Eine derartige Wägevorrichtung kann dadurch erweitert werden, dass Anbauten bzw. Zubehör wie z.B. Sensoren, Kameras, Führungsschienen etc. mit dem Gestell verbunden werden. Dies kann insbesondere mittels Klemmverbindern erfolgen, die über jeweilige erste Aufnahmen an Stäben des Gestells befestigt werden und deren jeweilige zweite Aufnahmen weitere Stäbe haltern, die mit dem jeweiligen Zubehör verbunden sind.

Aus dem Dokument EP 2 918 855 B1 ist ein Klemmverbinder bekannt, bei dem die beiden Aufnahmen jeweils, insbesondere die erste Aufnahme, zwei starr miteinander verbundene Klemmbacken aufweisen, zwischen denen ein Schlitz ausgebildet ist. Die Klemmbacken können mittels einer Spannschraube verspannt werden, wodurch ein in der ersten Aufnahme aufgenommener Stab verklemmt werden kann. Nachteilig bei derartigen Klemmverbindern ist, dass sie von axial auf den jeweiligen Stab des Gestells aufgeschoben werden müssen. Dies bedeutet, dass der jeweilige Stab des Gestells zum Zeitpunkt des Anbringens des Klemmverbinders nicht an beiden seiner Enden gehaltert sein kann, wodurch das Anbringen des Klemmverbinders verkompliziert wird.

Dieser Nachteil könnte dadurch vermieden werden, dass die beiden Klemmbacken zumindest der ersten Aufnahme nach Art einer Rohrschelle über ein Gelenk miteinander verbunden sind. Die "Rohrschelle" könnte dann zum Anbringen des Klemmverbinders an dem Stab des Gestells geöffnet und anschließend wieder geschlossen werden. Derartige Klemmverbinder wären jedoch weniger stabil und auf dem vorliegenden Fachgebiet daher eher ungeeignet.

Der Erfindung liegt daher die Aufgabe zugrunde, eine Wägevorrichtung der eingangs genannten Art anzugeben, die wenigstens einen Klemmverbinder aufweist, der stabil ist und gleichzeitig einfach an einem Stab eines Gestells der Wägevorrichtung anbringbar ist.

Diese Aufgabe wird durch eine Wägevorrichtung mit den Merkmalen des Anspruchs 1 gelöst, und insbesondere dadurch, dass der Stab an einer axialen Stelle an wenigstens einer von zwei, insbesondere an zwei, einander gegenüberliegenden Seiten, insbesondere jeweils, eine die Querschnittsfläche des Stabs verjüngende Ausnehmung aufweist, so dass der Stab an der axialen Stelle zwischen den beiden Seiten eine reduzierte Dicke aufweist, wobei die Öffnungsbreite des Schlitzes bzw. der Abstand der beiden Klemmbacken zueinander wenigstens der reduzierten Dicke des Stabs entspricht und kleiner als die Dicke des Stabs zwischen den beiden Seiten in einem nicht Dicken-reduzierten Normalbereich des Stabs ist, so dass der Klemmverbinder, insbesondere lediglich, an der axialen Stelle, jedoch nicht in dem Normalbereich, unter Einnahme einer initialen Aufsetzstellung aus radialer Richtung auf den Stab aufsetzbar ist und dadurch der Stab in der ersten Aufnahme aufnehmbar ist, und wobei bei in der ersten Aufnahme aufgenommenem Stab der Klemmverbinder in axialer Richtung des Stabs in eine Klemmposition in dem Normalbereich des Stabs verschiebbar ist, in der die erste Aufnahme des Klemmverbinders den Normalbereich des Stabs in Umfangsrichtung um mehr als 180° umgreift.

Erfindungsgemäß wird die Dicke des Stabs bereichsweise verringert, um zu ermöglichen, dass der Stab durch den Schlitz der ersten Aufnahme des Klemmverbinders hindurch in der ersten Aufnahme aufgenommen werden kann. Bei dem Schlitz der ersten Aufnahme des erfindungsgemäßen Klemmverbinders handelt es sich im Gegensatz zu dem Schlitz des aus dem Stand der Technik bekannten Klemmverbinders nicht nur um einen Spannschlitz, d.h. um einen Schlitz, der ein Spannen der beiden Klemmbacken ermöglicht, sondern um einen Durchgangsschlitz, durch den der Stab zuvor hindurchgeführt wird. Hierzu besitzt der Schlitz eine an die reduzierte Dicke des Stabs angepasste Öffnungsbreite. Erfindungsgemäß kann der Klemmverbinder daher aus radialer Richtung auf den Stab aufgesetzt werden, d.h. der Klemmverbinder muss - anders als im Stand der Technik - nicht aus axialer Richtung auf den Stab aufgeschoben werden. Zur eigentlichen Klemmung des Klemmverbinders an dem Stab wird der Klemmverbinder dann aus dem Bereich verringerter Dicke des Stabs heraus axial in den Normalbereich verschoben. Dort umgreift die erste Aufnahme des Klemmverbinders, insbesondere umgreifen die beiden Klemmbacken der ersten Aufnahme des Klemmverbinders, den Normalbereich des Stabs in Umfangsrichtung um mehr als 180°. Ein einfaches Abnehmen des Klemmverbinders in radialer Richtung von dem Stab ist zumindest in dem Normalbereich des Stabs daher nicht möglich. Darüber hinaus ist der Klemmverbinder auch besonders stabil, da die beiden Klemmbacken starr miteinander verbunden sind.

Insbesondere ist die Klemmposition des Klemmverbinders in dem Normalbereich des Stabs kontinuierlich einstellbar und/oder besitzt der Stab in dem Normalbereich einen gleichbleibenden Querschnitt. Der Klemmverbinder kann aus einem Stück gebildet sein. Der Klemmverbinder kann eine blockartige Grundform aufweisen. Die, insbesondere jeweilige, Ausnehmung, kann, insbesondere jeweils, eine ebene Bodenfläche aufweisen, wobei die beiden Ausnehmungen parallel zueinander verlaufen können. Darüber hinaus kann wenigstens eine weitere derartige axiale Stelle vorgesehen sein.

Vorzugsweise besitzt die reduzierte Dicke des Stabs einen Wert, der in einem Bereich zwischen 60% und 95%, insbesondere zwischen 70% und 90%, der Dicke des Stabs zwischen den beiden Seiten in dem Normalbereich liegt. Eine derart reduzierte Dicke stellt einerseits sicher, dass der Stab nicht zu stark geschwächt wird, und andererseits wird gewährleistet, dass ein ausreichend weites Umgreifen des Stabs durch die erste Aufnahme bzw. die beiden Klemmbacken der ersten Aufnahme möglich ist.

Bevorzugt ist in der Klemmposition des Klemmverbinders der Normalbereich des Stabs passgenau in der ersten Aufnahme des Klemmverbinders aufgenommen. Durch eine passgenaue Aufnahme des Normalbereichs des Stabs in der ersten Aufnahme ist nur noch ein geringer Spannaufwand erforderlich, um den Stab wirksam in der ersten Aufnahme zwischen den beiden Klemmbacken zu verklemmen.

Grundsätzlich ist es bevorzugt, wenn in der Klemmposition des Klemmverbinders der Normalbereich des Stabs unter Ausbildung einer formschlüssigen Verbindung, d.h. formschlüssig, und damit verdrehsicher in der ersten Aufnahme des Klemmverbinders aufgenommen ist. Durch die Verdrehsicherung kann einerseits ein selbsttätiges, schwerkraftbedingtes Verdrehen des Klemmverbinders an dem Stab im noch nicht geklemmten Zustand verhindert und anderseits ein automatisches Ausrichten des Klemmverbinders erreicht werden.

Die formschlüssige Verbindung kann dabei umfassen, dass der Außenquerschnitt des Stabs in dem Normalbereich eine von einem Kreis abweichende Form aufweist und der Innenquerschnitt der ersten Aufnahme des Klemmverbinders hierzu gegenförmig ausgebildet ist. Insbesondere kann hierzu der Stab in dem Normalbereich als eine Stange mit rundem Querschnitt ausgebildet sein, die einseitig abgeplattet ist.

Vorzugsweise ist die wenigstens eine Ausnehmung an einer lateralen Seite des Stabs vorgesehen, insbesondere sind die beiden Ausnehmungen an den beiden lateralen Seiten des Stabs vorgesehen. Die maximale vertikale Erstreckung des Stabs wird hierdurch nicht verringert. Bei einer an der oberen Seite und/oder der unteren Seite vorgesehenen Ausnehmung hingegen wird die maximale vertikale Erstreckung des Stabs verringert, d.h. gerade in der Richtung, in der die Gewichtskraft des angebauten Zubehörs aufgenommen werden muss, was aufgrund von Kerbeffekten nachteilig für die Stabilität der Anordnung ist.

Gemäß einer bevorzugten Ausführungsform der Erfindung ist der Klemmverbinder an der axialen Stelle aus der Aufsetzstellung, insbesondere um einen vorgegebenen Winkel, insbesondere um 90°, um die Längsachse des Stabs in eine Verschiebestellung drehbar, wobei der Klemmverbinder lediglich aus der Verschiebestellung, nicht jedoch aus der Aufsetzstellung, in axialer Richtung in die Klemmposition verschiebbar ist. Der Klemmverbinder muss also zunächst um die Längsachse des Stabs gedreht werden, bevor die axiale Verschiebung in die Klemmposition erfolgen kann. Dies ist insbesondere dann von Vorteil, wenn für den Klemmverbinder eine andere Ausrichtung als diejenige, die durch die Aufsetzstellung erhalten wird, gewünscht ist. Eine Aufsetzstellung, die zu einer unerwünschten Ausrichtung des Klemmverbinders in der Aufsetzstellung führen kann, kann beispielsweise in dem vorgenannten Fall vorliegen, wenn die wenigstens eine Ausnehmung an einer lateralen Seite des Stabs vorgesehen ist. Ein Verschieben des Klemmverbinders aus der Aufsetzstellung in axialer Richtung kann insbesondere dadurch verhindert werden, dass die Dicke des Stabs zwischen den beiden Seiten in dem Normalbereich größer als die entsprechend gerichtete Abmessung der ersten Aufnahme in der Aufsetzstellung des Klemmverbinders ist.

Darüber hinaus ist es bevorzugt, wenn der Außenquerschnitt des Stabs an der axialen Stelle und der Innenquerschnitt der ersten Aufnahme des Klemmverbinders derart aufeinander abgestimmt sind, dass die Drehung des Klemmverbinders auf eine Drehung bis in die Verschiebestellung, in der der Stab in der ersten Aufnahme des Klemmverbinders verklemmt, begrenzt ist. Hierdurch wird erreicht, dass der Klemmverbinder die Verschiebestellung, aus der er dann axial in die Klemmposition verschiebbar ist, gewissermaßen automatisch einnehmen kann.

Besonders intuitiv kann der Anbau eines Zubehörs vorgenommen werden, wenn der Stab horizontal ausgerichtet ist und/oder bei in die Klemmposition verschobenem Stab die Mittelachse der zweiten Aufnahme vertikal ausgerichtet ist. Dies kann gleichzeitig insbesondere dadurch erreicht werden, wenn der Klemmverbinder als Kreuzklemmverbinder ausgebildet ist. Die beiden Mittelachsen der beiden Aufnahmen verlaufen dann senkrecht zueinander. Grundsätzlich kann der Klemmverbinder aber auch anderweitig ausgebildet sein. Insbesondere ist es bevorzugt, wenn sich die beiden Aufnahmen nicht schneiden.

Darüber hinaus kann eine Spannschraube vorgesehen sein, mit der die beiden Klemmbacken der ersten Aufnahme aufeinander zu spannbar sind. Die Spannschraube kann fest mit einem Klemmhebel verbunden sein.

Auch die zweite Aufnahme kann zwei Klemmbacken aufweisen, zwischen denen jedoch lediglich ein insbesondere üblicher Spannschlitz ausgebildet sein kann und die, insbesondere mittels einer Spannschraube, insbesondere mit oder ohne Klemmhebel, aufeinander zu spannbar sind, derart, dass der weitere Stab, insbesondere ein Rundstab, in der zweiten Aufnahme verklemmbar ist. Der weitere Stab wird dann - wie aus dem Stand der Technik bekannt - in axialer Richtung durch die zweite Aufnahme hindurch geschoben.

Weitere vorteilhafte Ausgestaltungen der Erfindung sind in den Unteransprüchen, der weiteren Beschreibung und der Zeichnung beschrieben.

Die Erfindung wird nachfolgend beispielhaft unter Bezugnahme auf die Zeichnung beschrieben. Es zeigen:
- Fig. 1: eine erfindungsgemäße Wägevorrichtung mit Gestell mit Stangen und über Klemmverbinder an den Stangen angebautem Zubehör,
- Fig. 2: eine vergrößerte Teilansicht der Wägevorrichtung aus Fig. 1,
- Fig. 3: einen erfindungsgemäß ausgebildeten Klemmverbinder,
- Fig. 4A, B: eine erfindungsgemäß ausgebildete Stange in zwei verschiedenen perspektivischen Ansichten,
- Fig. 5A-F: aufeinanderfolgende Verfahrensschritte für den Anbau des Klemmverbinders gemäß Fig. 3 an die Stange gemäß Fig. 4,
- Fig. 6: eine Rückansicht auf die Anordnung gemäß Fig. 5F, und
- Fig. 7: eine weitere Ausführungsform für eine erfindungsgemäß ausgebildete Stange.

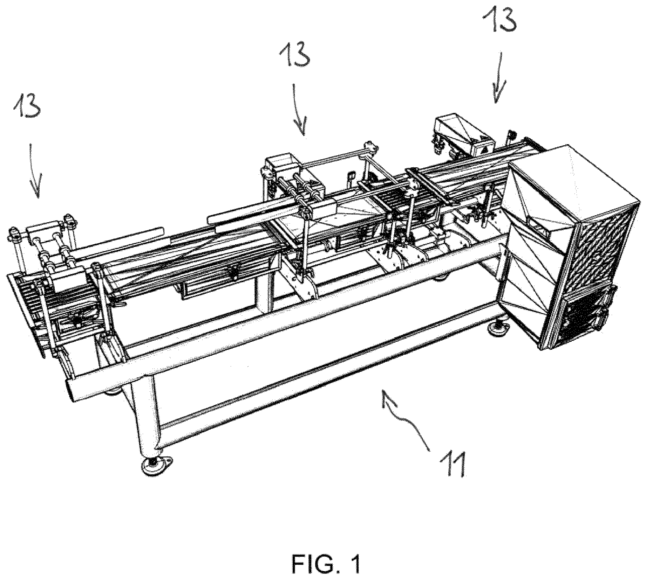

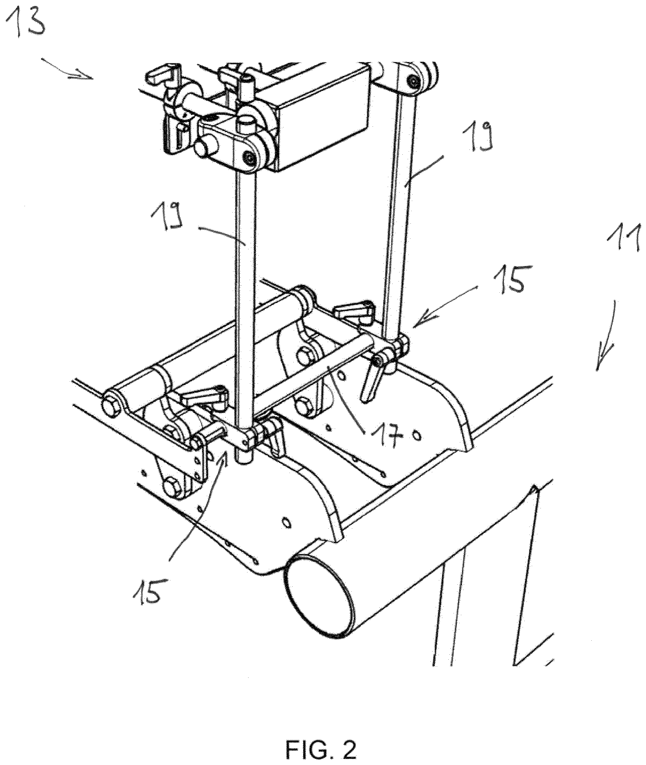

Fig. 1 zeigt eine Kontrollwaage mit einem Gestell 11, an das verschiedenes Zubehör 13 angebaut ist. Der Anbau des Zubehörs 13 erfolgt über Kreuzklemmverbinder 15, die an horizontal verlaufenden Stangen 17 des Gestells 11 angebracht sind, wobei das Zubehör 13 über vertikal verlaufende, weitere Stangen 19 an den Kreuzklemmverbindern 15 angebracht ist, wie aus Fig. 2 besser ersichtlich ist.

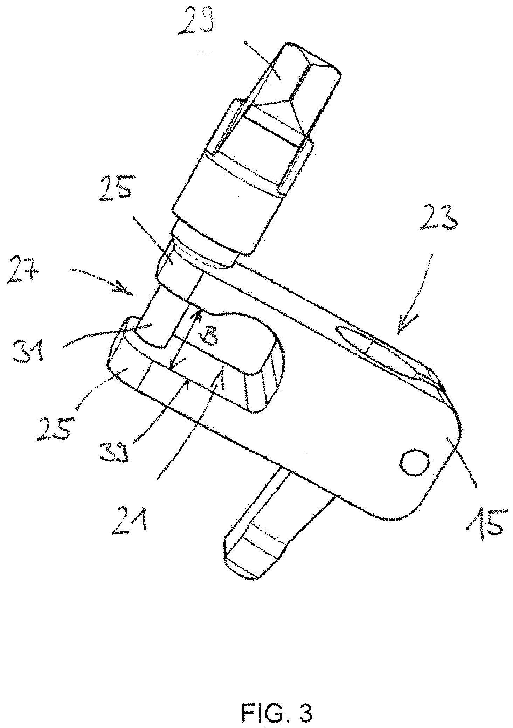

Der jeweilige Kreuzklemmverbinder 15 ist gemäß Fig. 3 aus einem Stück gebildet und umfasst eine erste Aufnahme 21, in der die Stange 17 aufgenommen wird, und eine zweite Aufnahme 23, in der die weitere Stange 19 aufgenommen wird.

Die beiden Mittelachsen der beiden Aufnahmen 21, 23 sind bei einem Kreuzklemmverbinder senkrecht zueinander orientiert. Grundsätzlich können die beiden Mittelachsen jedoch auch anderweitig zueinander orientiert sein. Die erste Aufnahme 21, mit der der Kreuzklemmverbinder 15 an der Stange 17 befestigt wird, umfasst zwei Klemmbacken 25, die starr miteinander verbunden sind. Zwischen den beiden Klemmbacken 25 ist ein Schlitz 27 mit einer Öffnungsbreite B ausgebildet. Darüber hinaus ist eine Spannschraube 31 vorgesehen, die über einen Klemmhebel 29 betätigbar ist und mit der die beiden Klemmbacken 25 aufeinander zu gespannt werden können, um die Stange 17 in der ersten Aufnahme 21 zu verklemmen.

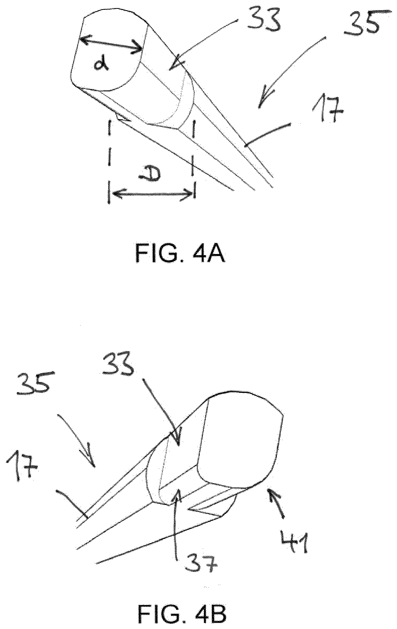

Die jeweilige Stange 17 des Gestells 11, an der der jeweilige Klemmverbinder 15 angebracht wird, ist gemäß Fig. 4A, B als eine Rundstange 17 ausgebildet, die an ihrer Unterseite abgeplattet ist. Die Abplattung dient insbesondere als Verdrehsicherung, wie nachfolgend noch näher erläutert wird. An einer axialen Stelle weist die Stange 17 an ihren zwei einander gegenüberliegenden lateralen Seiten jeweils eine Ausnehmung 33 auf, so dass die Querschnittsfläche der Stange 17 an dieser Stelle auf eine gegenüber einer in einem nicht Dicken-reduzierten Normalbereich 35 der Stange 17 vorliegenden Normaldicke D der Stange 17 reduzierte Dicke d verjüngt ist. Die Verringerung der Normaldicke D auf die reduzierte Dicke d beträgt dabei ca. 20%.

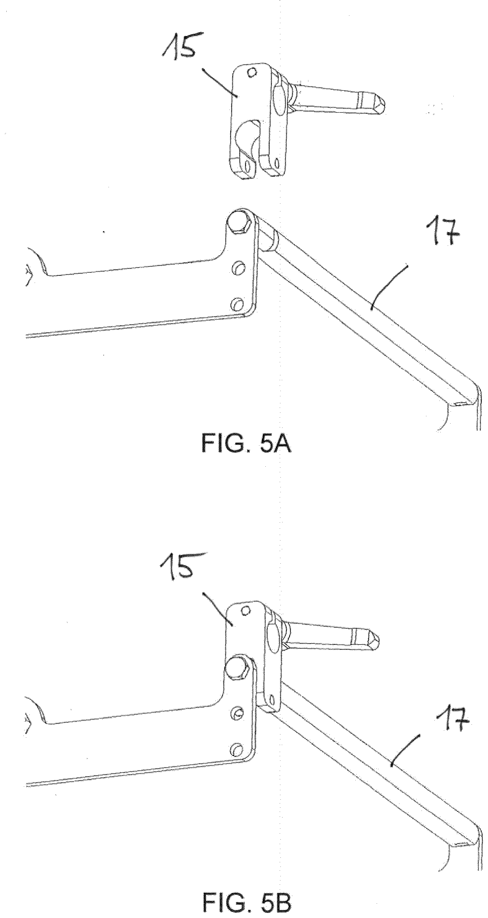

Die Öffnungsbreite B des Schlitzes 27 ist kleiner als die Normaldicke D der Stange 17 in lateraler Richtung und kleiner als die Höhe der Stange 17, jedoch größer als die reduzierte Dicke d der Stange 17 im Bereich der Ausnehmungen 33. Hierdurch wird ermöglicht, dass der Klemmverbinder 15 im Bereich der Ausnehmungen 33 von oben radial auf die Stange 17 aufsetzbar ist, wodurch die Stange 17 in der ersten Aufnahme 21 aufgenommen werden kann, wie es in den Fig. 5A und 5B gezeigt ist. Das Aufsetzen des Klemmverbinders 15 auf die Stange 17 setzt voraus, dass die Spannschraube 31 aus den Klemmbacken 25 zurückgezogen ist, d.h. dass der Schlitz 27 frei zugänglich ist, damit die Stange 17 durch den Schlitz 27 hindurch treten kann. In dem Normalbereich 35 hingegen ist ein Aufsetzen des Klemmverbinders 15 auf die Stange 17 nicht möglich.

In Fig. 5B nimmt der Klemmverbinder 15 eine initiale Aufsetzstellung ein. In dieser Aufsetzstellung kann der Klemmverbinder 15 nicht in axialer Richtung der Stange 17 in den Normalbereich 35 der Stange 17 verschoben werden, da die Normaldicke D der Stange 17 größer als die entsprechend gerichtete Abmessung der ersten Aufnahme 21 in der Aufsetzstellung des Klemmverbinders 15 ist.

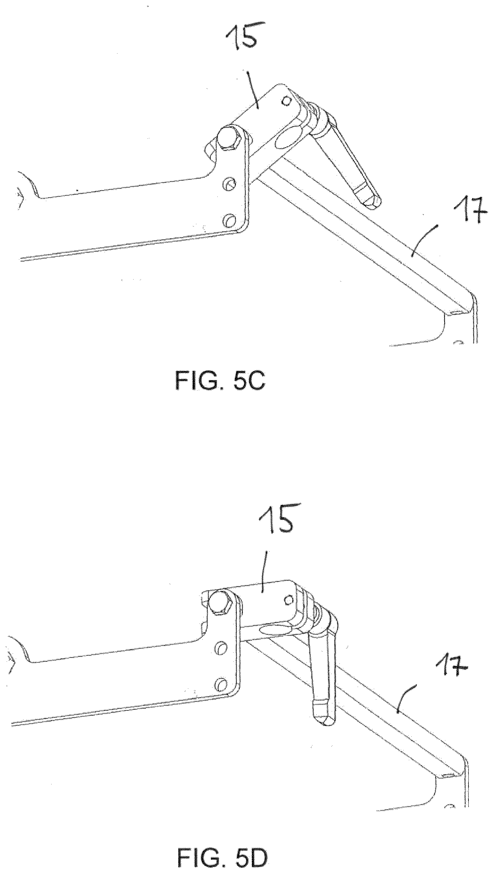

Eine derartiges axiales Verschieben wird jedoch ermöglicht, wenn der Klemmverbinder 15 aus seiner Aufsetzstellung gemäß Fig. 5B im Uhrzeigersinn um 90° um die Längsachse der Stange 17 in eine Verschiebestellung gedreht wird, wie es in den Fig. 5C und 5D gezeigt ist, da der Normalbereich 35 der Stange 17 und die erste Aufnahme 21 des Klemmverbinders 15 derart ausgebildet sind, dass in der Verschiebestellung des Klemmverbinders 15 gemäß Fig. 5D der Normalbereich 35 der Stange 17 passgenau in der ersten Aufnahme 21 des Klemmverbinders 15 aufgenommen werden kann.

Aufgrund der vorgenannten Abplattung der Stange 17 an ihrer Unterseite und der entsprechend gegenförmigen Ausbildung der ersten Aufnahme 21 wird der Normalbereich 35 der Stange 17 auch formschlüssig und damit verdrehsicher in der ersten Aufnahme 21 aufgenommen, wodurch insbesondere ein automatisches Ausrichten des Klemmverbinders 15 im Raum erfolgt. Grundsätzlich kann auf die Abplattung und damit auf die Verdrehsicherung auch verzichtet werden.

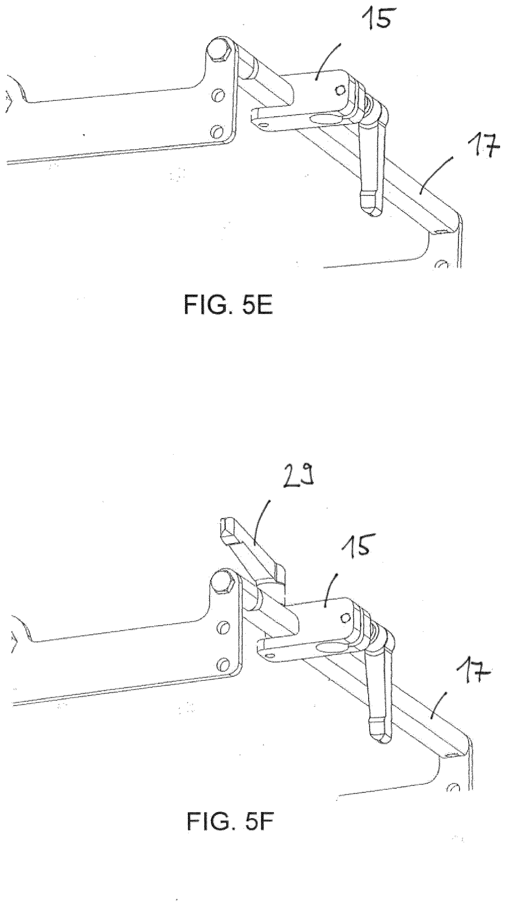

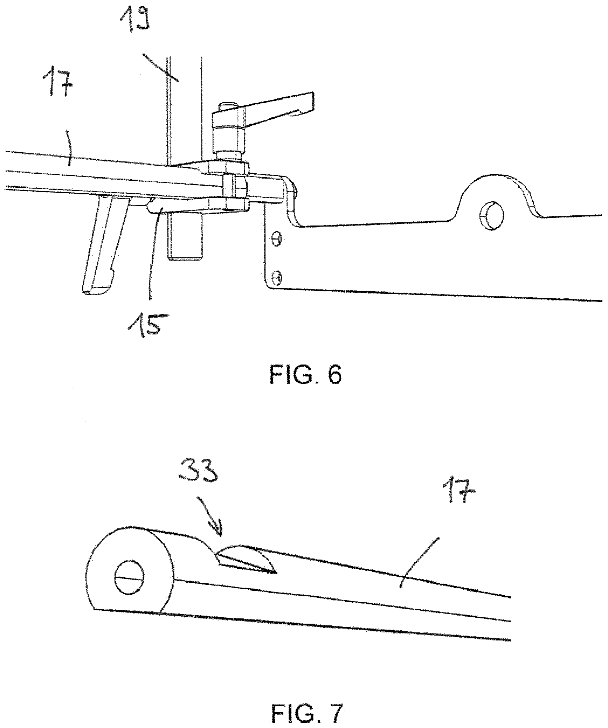

Der entsprechend in axialer Richtung in eine grundsätzlich frei wählbare Klemmposition in dem Normalbereich 35 der Stange 17 verschobene Klemmverbinder 15 ist in Fig. 5E gezeigt, wobei in Fig. 5F zusätzlich der zugehörige Klemmhebel 29 dargestellt ist, durch den der Klemmverbinder 15 an der Stange 17 festgeklemmt werden kann. Wie aus der Rückansicht gemäß Fig. 6 erkennbar ist, umgreifen die beiden Klemmbacken 25 der ersten Aufnahme 21 des Klemmverbinders 15 in der Klemmposition den Normalbereich 35 der Stange 17 in Umfangsrichtung um mehr als 180°, so dass ein radiales Abnehmen des Klemmverbinders 15 von der Stange 17 in dem Normalbereich 35 der Stange 17 nicht möglich ist. Dies gilt im Übrigen auch bereits für die Verschiebeposition des Klemmverbinders 15 gemäß Fig. 5D.

Darüber hinaus wird darauf hingewiesen, dass eine Drehung des Klemmverbinders 15 um die Längsachse der Stange 17 über die Verschiebestellung gemäß Fig. 5D hinaus nicht möglich ist, da der Stab 17 in der Verschiebestellung des Klemmverbinders 15 in der ersten Aufnahme 21 verklemmt. Dies wird dadurch erreicht, dass der Stab 17 an der axialen Stelle an dem Übergangsbereich 37 zwischen der abgeplatteten Unterseite und der in Fig. 4 linken Ausnehmung 33 eine kleine Abrundung mit lediglich kleinem Radius aufweist, welcher Übergangsbereich 37 bei einem Drehen des Klemmverbinders 15 über die Verschiebestellung hinaus mit dem die Abplattung des Stabs 17 nachbildenden geraden Konturbereich 39 der ersten Aufnahme 21 des Klemmverbinders 15 (vgl. Fig. 3) kollidiert. Der Übergangsbereich 41 zwischen der abgeplatteten Unterseite und der in Fig. 4 rechten Ausnehmung 33 hingegen weist eine große Abrundung mit größerem Radius auf, so dass der in Drehrichtung dem Übergangsbereich 37 vorgelagerte Übergangsbereich 41 einer Drehung des Klemmverbinders 15 bis in die Verschiebestellung nicht entgegen steht, sondern in diesem Drehbereich vielmehr ein Entlanggleiten an der Innenkontur der ersten Aufnahme 21 ermöglicht.

Das Anbauen von Zubehör 13 an das Gestell 11 der Wägevorrichtung über die vorstehend erläuterte Einrichtung aus Stange 17 und Klemmverbinder 15 ermöglicht, dass der ohne Gelenk zwischen den beiden Klemmbacken 25 auskommende Klemmverbinder 15 aus radialer Richtung auf die Stange 17 aufgesetzt werden kann, d.h. der Klemmverbinder muss nicht aus axialer Richtung auf die Stange 17 aufgeschoben werden. Dies bedeutet, dass die Stange 17 bereits beim Aufsetzen des Klemmverbinders 15 an ihren beiden Enden gehaltert sein kann. Dadurch, dass die Ausnehmungen 33 an den lateralen Seiten der Stange 17 - und nicht an der Oberseite und der Unterseite der Stange - vorgesehen sind, bleibt die maximale vertikale Erstreckung der Stange 17, d.h. die Erstreckung in der Richtung, in der die Gewichtskraft des angebauten Zubehörs 13 wirkt, erhalten, wodurch die Tragestabilität der Stange 17 allenfalls vernachlässigbar reduziert wird. Durch die Verdrehsicherung kann der Klemmverbinder 15 in der Klemmposition automatisch in der gewünschten Stellung im Raum ausgerichtet werden.

Grundsätzlich ist es auch möglich, dass an der Stange 17 nur eine Ausnehmung 33 vorgesehen ist, wie es in Fig. 7 gezeigt ist. Die Ausnehmung 33 kann insbesondere an der Oberseite der Stange 17 vorgesehen sein, so dass der Klemmverbinder 15 in der Klemmposition dieselbe Orientierung wie in der vorstehend erläuterten Ausführungsform einnimmt. Ein Überführen des Klemmverbinders 15 aus der initialen Aufsetzstellung in eine Verschiebestellung ist dabei nicht erforderlich. Um das Verschieben des Klemmverbinders 15 zu unterstützen, kann der Übergang zwischen der Ausnehmung 33 und dem Normalbereich 35 abgeschrägt bzw. als Rampe ausgebildet sein (nicht gezeigt).

### Bezugszeichenliste

- 11: Gestell
- 13: Zubehör
- 15: Kreuzklemmverbinder
- 17: Stange
- 19: weitere Stange
- 21: erste Aufnahme
- 23: zweite Aufnahme
- 25: Klemmbacke
- 27: Schlitz
- 29: Klemmhebel
- 31: Spannschraube
- 33: Ausnehmung
- 35: Normalbereich
- 37: Übergangsbereich
- 39: gerader Konturbereich
- 41: Übergangsbereich

- B: Öffnungsbreite
- d: reduzierte Dicke
- D: Normaldicke

## Patentansprüche

1. Wägevorrichtung, insbesondere Kontrollwaage oder Preisauszeichnungssystem, mit einem Gestell (11), das wenigstens einen Stab (17), insbesondere eine Stange mit zumindest teilweise rundem Querschnitt, aufweist, und mit wenigstens einem Klemmverbinder (15), insbesondere einem Kreuzklemmverbinder, zum Verbinden des Stabs (17) mit einem weiteren Stab (19) zum Anbauen von Zubehör (13) an das Gestell (11),
wobei der Klemmverbinder (15) eine erste Aufnahme (21) für den Stab (17) und eine zweite Aufnahme (23) für den weiteren Stab (19) aufweist,
wobei die erste Aufnahme (21) zwei Klemmbacken (25) aufweist, die starr miteinander verbunden sind und zwischen denen ein Schlitz (27) ausgebildet ist, wobei die beiden Klemmbacken (25), insbesondere mittels einer Spannschraube (31), aufeinander zu spannbar sind, derart, dass der Stab (17) in der ersten Aufnahme (21) verklemmbar ist,
wobei der Stab (17) an einer axialen Stelle an wenigstens einer von zwei, insbesondere an zwei, einander gegenüberliegenden Seiten, insbesondere jeweils, eine die Querschnittsfläche des Stabs (17) verjüngende Ausnehmung (33) aufweist, so dass der Stab (17) an der axialen Stelle zwischen den beiden Seiten eine reduzierte Dicke (d) aufweist,
wobei die Öffnungsbreite (B) des Schlitzes (27) wenigstens der reduzierten Dicke (d) des Stabs (17) entspricht und kleiner als die Dicke (D) des Stabs (17) zwischen den beiden Seiten in einem nicht Dicken-reduzierten Normalbereich (35) des Stabs (17) ist, so dass der Klemmverbinder (15) an der axialen Stelle, jedoch nicht in dem Normalbereich (35), unter Einnahme einer initialen Aufsetzstellung aus radialer Richtung auf den Stab (17) aufsetzbar ist und dadurch der Stab (17) in der ersten Aufnahme (21) aufnehmbar ist, und
wobei bei in der ersten Aufnahme (21) aufgenommenem Stab (17) der Klemmverbinder (15) in axialer Richtung des Stabs (17) in eine Klemmposition in dem Normalbereich (35) des Stabs (17) verschiebbar ist, in der die erste Aufnahme (21) des Klemmverbinders (15) den Normalbereich (35) des Stabs (17) in Umfangsrichtung um mehr als 180° umgreift.

2. Wägevorrichtung nach Anspruch 1,
**dadurch gekennzeichnet, dass**
die reduzierte Dicke (d) des Stabs (17) einen Wert besitzt, der in einem Bereich zwischen 60% und 95%, insbesondere zwischen 70% und 90%, der Dicke des Stabs (D) zwischen den beiden Seiten in dem Normalbereich (35) liegt.

3. Wägevorrichtung nach Anspruch 1 oder 2,
**dadurch gekennzeichnet, dass**
in der Klemmposition des Klemmverbinders (15) der Normalbereich (35) des Stabs (17) passgenau in der ersten Aufnahme (21) des Klemmverbinders (15) aufgenommen ist.

4. Wägevorrichtung nach zumindest einem der vorstehenden Ansprüche,
**dadurch gekennzeichnet, dass**
in der Klemmposition des Klemmverbinders (15) der Normalbereich (35) des Stabs (17) unter Ausbildung einer formschlüssigen Verbindung und damit verdrehsicher in der ersten Aufnahme (21) des Klemmverbinders (15) aufgenommen ist.

5. Wägevorrichtung nach Anspruch 4,
**dadurch gekennzeichnet, dass**
die formschlüssige Verbindung umfasst, dass der Außenquerschnitt des Stabs (17) in dem Normalbereich (35) eine von einem Kreis abweichende Form aufweist und der Innenquerschnitt der ersten Aufnahme (21) des Klemmverbinders (15) hierzu gegenförmig ausgebildet ist.

6. Wägevorrichtung nach Anspruch 5,
**dadurch gekennzeichnet, dass**
der Stab (17) in dem Normalbereich (35) als eine Stange mit rundem Querschnitt ausgebildet ist, die einseitig abgeplattet ist.

7. Wägevorrichtung nach zumindest einem der vorstehenden Ansprüche,
**dadurch gekennzeichnet, dass**
die wenigstens eine Ausnehmung (33) an einer lateralen Seite des Stabs (17) vorgesehen ist, insbesondere die beiden Ausnehmungen (33) an den beiden lateralen Seiten des Stabs (17) vorgesehen sind.

8. Wägevorrichtung nach zumindest einem der vorstehenden Ansprüche,
**dadurch gekennzeichnet, dass**
der Klemmverbinder (15) an der axialen Stelle aus der Aufsetzstellung um die Längsachse des Stabs (17) in eine Verschiebestellung drehbar ist, wobei der Klemmverbinder (15) lediglich aus der Verschiebestellung, nicht jedoch aus der Aufsetzstellung, in axialer Richtung in die Klemmposition verschiebbar ist.

9. Wägevorrichtung nach Anspruch 8,
**dadurch gekennzeichnet, dass**
die Dicke (D) des Stabs (17) zwischen den beiden Seiten in dem Normalbereich (35) größer als die entsprechend gerichtete Abmessung der ersten Aufnahme (21) in der Aufsetzstellung des Klemmverbinders (15) ist.

10. Wägevorrichtung nach zumindest einem der vorstehenden Ansprüche,
**dadurch gekennzeichnet, dass**
der Außenquerschnitt des Stabs (17) an der axialen Stelle und der Innenquerschnitt der ersten Aufnahme (21) des Klemmverbinders (15) derart aufeinander abgestimmt sind, dass die Drehung des Klemmverbinders (15) auf eine Drehung bis in die Verschiebestellung, in der der Stab (17) in der ersten Aufnahme (21) des Klemmverbinders (15) verklemmt, begrenzt ist.

11. Wägevorrichtung nach zumindest einem der vorstehenden Ansprüche,
**dadurch gekennzeichnet, dass**
der Stab (17) horizontal ausgerichtet ist und/oder bei in die Klemmposition verschobenem Stab (17) die Mittelachse der zweiten Aufnahme (23) vertikal ausgerichtet ist.

12. Wägevorrichtung nach zumindest einem der vorstehenden Ansprüche,
**dadurch gekennzeichnet, dass**
der Klemmverbinder (15) als Kreuzklemmverbinder ausgebildet ist.

13. Wägevorrichtung nach zumindest einem der vorstehenden Ansprüche,
**dadurch gekennzeichnet, dass**
eine Spannschraube (31) vorgesehen ist, mit der die beiden Klemmbacken (25) der ersten Aufnahme (21) aufeinander zu spannbar sind, wobei insbesondere die Spannschraube (31) fest mit einem Klemmhebel (29) verbunden ist.

## Claims

1. A weighing apparatus, in particular a checkweigher or a price labeling system, having a frame (11) which has at least one bar (17), in particular a rod having an at least partly round cross-section, and having at least one clamp connector (15), in particular a cross-clamp connector, for connecting the bar (17) to a further bar (19) in order to attach accessories (13) to the frame (11),
wherein the clamp connector (15) has a first receiver (21) for the bar (17) and a second receiver (23) for the further bar (19);
wherein the first receiver (21) has two clamp jaws (25) which are rigidly connected to one another and between which a slot (27) is formed, with the two clamp jaws (25) being able to be tensioned toward one another, in particular by means of a tensioning screw (31), such that the bar (17) can be clamped in the first receiver (21);
wherein the bar (17) has a recess (33), which reduces the cross-sectional surface of the bar (17), at an axial point at at least one of two, in particular at two, mutually oppositely disposed sides, in particular in each case, so that the bar (17) has a reduced thickness (d) between the two sides at the axial point;
wherein the opening width (B) of the slot (27) at least corresponds to the reduced thickness (d) of the bar (17) and is smaller than the thickness (D) of the bar (17) between the two sides in a non-thickness-reduced normal region (35) of the bar (17) so that the clamp connector (15) can be placed onto the bar (17) from the radial direction at the axial point, but not in the normal region (35), while adopting an initial placement position, and the bar (17) can thereby be received in the first receiver (21); and
wherein, when the bar (17) is received in the first receiver (21), the clamp connector (15) is displaceable in the axial direction of the bar (17) into a clamping position in the normal region (35) of the bar (17), in which clamping position the first receiver (21) of the clamp connector (15) engages around the normal region (35) of the bar (17) by more than 180° in the peripheral direction.

2. A weighing apparatus in accordance with claim 1,
**characterized in that**
the reduced thickness (d) of the bar (17) has a value which lies in a range between 60% and 95%, in particular between 70% and 90%, of the thickness of the rod (D) between the two sides in the normal region (35).

3. A weighing apparatus in accordance with claim 1 or claim 2,
**characterized in that**,
in the clamping position of the clamp connector (15), the normal region (35) of the bar (17) is received with an exact fit in the first receiver (21) of the clamp connector (15).

4. A weighing apparatus in accordance with at least one of the preceding claims,
**characterized in that**,
in the clamping position of the clamp connector (15), the normal region (35) of the bar (17) is received in the first receiver (21) of the clamp connector (15) while forming a form-fit connection and is thus received in a manner secured against rotation.

5. A weighing apparatus in accordance with claim 4,
**characterized in that**
the form-fit connection comprises that the outer cross-section of the bar (17) has a shape deviating from a circle in the normal region (35) and the inner cross-section of the first receiver (21) of the clamp connector (15) is formed with a counter-shape thereto.

6. A weighing apparatus in accordance with claim 5,
**characterized in that**,
in the normal region (35), the bar (17) is configured as a rod which has a round cross-section which is flattened at one side.

7. A weighing apparatus in accordance with at least one of the preceding claims,
**characterized in that**
the at least one recess (33) is provided at a lateral side of the bar (17), with in particular the two recesses (33) being provided at the two lateral sides of the bar (17).

8. A weighing apparatus in accordance with at least one of the preceding claims,
**characterized in that**,
at the axial point, the clamp connector (15) is rotatable from the placement position about the longitudinal axis of the bar (17) into a displacement position, with the clamp connector (15) only being displaceable from the displacement position, but not from the placement position, in the axial direction into the clamping position.

9. A weighing apparatus in accordance with claim 8,
**characterized in that**
the thickness (D) of the bar (17) between the two sides in the normal region (35) is greater than the correspondingly directed dimension of the first receiver (21) in the placement position of the clamp connector (15).

10. A weighing apparatus in accordance with at least one of the preceding claims,
**characterized in that**
the outer cross-section of the bar (17) at the axial point and the inner cross-section of the first receiver (21) of the clamp connector (15) are coordinated with one another such that the rotation of the clamp connector (15) is limited to a rotation up to and into the displacement position in which the bar (17) is clamped in the first receiver (21) of the clamp connector (15).

11. A weighing apparatus in accordance with at least one of the preceding claims,
**characterized in that**
the bar (17) is oriented horizontally and/or, when the bar (17) is displaced into the clamping position, the central axis of the second receiver (23) is oriented vertically.

12. A weighing apparatus in accordance with at least one of the preceding claims,
**characterized in that**
the clamp connector (15) is configured as a cross-clamp connector.

13. A weighing apparatus in accordance with at least one of the preceding claims,
**characterized in that**
a tensioning screw (31) is provided by which the two clamp jaws (25) of the first receiver (21) can be tensioned toward one another, with in particular the tensioning screw (31) being fixedly connected to a clamping lever (29).

## Revendications

1. Dispositif de pesage, en particulier balance de contrôle ou système d'étiquetage de prix, comportant un cadre (11) qui présente au moins une barre (17), en particulier une tige de section transversale au moins partiellement ronde, et comportant au moins un connecteur de serrage (15), en particulier un connecteur de serrage en croix, pour relier la barre (17) à une autre barre (19) pour attacher des accessoires (13) au cadre (11),
dans lequel
le connecteur de serrage (15) présente un premier logement (21) pour la barre (17) et un second logement (23) pour l'autre barre (19),
le premier logement (21) présente deux mâchoires de serrage (25) qui sont reliées rigidement l'une à l'autre et entre lesquelles est formée une fente (27), les deux mâchoires de serrage (25) pouvant être serrées l'une contre l'autre, en particulier au moyen d'une vis de serrage (31), de telle sorte que la barre (17) peut être serrée dans le premier logement (21),
à un emplacement axial sur l'un au moins de deux, en particulier sur deux, côtés opposés, la barre (17) présente en particulier respectivement un évidement (33) rétrécissant la surface de section transversale de la barre (17), de sorte que la barre (17) présente une épaisseur réduite (d) à l'emplacement axial entre les deux côtés,
la largeur d'ouverture (B) de la fente (27) correspond au moins à l'épaisseur réduite (d) de la barre (17) et est inférieure à l'épaisseur (D) de la barre (17) entre les deux côtés dans une zone normale (35) de la barre (17) non réduite en épaisseur, de sorte que le connecteur de serrage (15) peut être placé sur la barre (17) depuis la direction radiale à l'emplacement axial, mais non pas dans la zone normale (35), tout en prenant une position de placement initiale, et que la barre (17) puisse ainsi être logée dans le premier logement (21), et
lorsque la barre (17) est logée dans le premier logement (21), le connecteur de serrage (15) peut être déplacé dans la direction axiale de la barre (17) jusque dans une position de serrage dans la zone normale (35) de la barre (17), position dans laquelle le premier logement (21) du connecteur de serrage (15) entoure la zone normale (35) de la barre (17) sur plus de 180° dans la direction circonférentielle.

2. Dispositif de pesage selon la revendication 1,
**caractérisé en ce que**
l'épaisseur réduite (d) de la barre (17) a une valeur qui se situe dans une plage comprise entre 60% et 95%, en particulier entre 70% et 90%, de l'épaisseur de la barre (D) entre les deux côtés dans la zone normale (35).

3. Dispositif de pesage selon la revendication 1 ou 2,
**caractérisé en ce que**
dans la position de serrage du connecteur de serrage (15), la zone normale (35) de la barre (17) est logée dans le premier logement (21) du connecteur de serrage (15) de manière à s'adapter précisément.

4. Dispositif de pesage selon l'une au moins des revendications précédentes,
**caractérisé en ce que**
dans la position de serrage du connecteur de serrage (15), la zone normale (35) de la barre (17) est logée dans le premier logement (21) du connecteur de serrage (15) en établissant une liaison par coopération de forme et donc en étant bloquée à l'encontre d'une rotation.

5. Dispositif de pesage selon la revendication 4,
**caractérisé en ce que**
la liaison par coopération de forme inclut que la section transversale extérieure de la barre (17) dans la zone normale (35) présente une forme qui diffère d'un cercle et que la section transversale intérieure du premier logement (21) du connecteur de serrage (15) est réalisée avec une forme complémentaire à ladite forme.

6. Dispositif de pesage selon la revendication 5,
**caractérisé en ce que**
dans la zone normale (35), la barre (17) est réalisée sous forme de tige ayant une section transversale ronde qui est aplatie sur un côté.

7. Dispositif de pesage selon l'une au moins des revendications précédentes,
**caractérisé en ce que**
ledit au moins un évidement (33) est prévu sur un côté latéral de la barre (17), en particulier les deux évidements (33) sont prévus sur les deux côtés latéraux de la barre (17).

8. Dispositif de pesage selon l'une au moins des revendications précédentes,
**caractérisé en ce que**
à l'emplacement axial, le connecteur de serrage (15) peut tourner autour de l'axe longitudinal de la barre (17) depuis la position de placement jusque dans une position de déplacement, le connecteur de serrage (15) pouvant être déplacé dans la direction axiale jusque dans la position de serrage uniquement à partir de la position de déplacement, mais non pas à partir de la position de placement.

9. Dispositif de pesage selon la revendication 8,
**caractérisé en ce que**
l'épaisseur (D) de la barre (17) entre les deux côtés dans la zone normale (35) est supérieure à la dimension orientée de manière correspondante du premier logement (21) dans la position de placement du connecteur de serrage (15).

10. Dispositif de pesage selon l'une au moins des revendications précédentes,
**caractérisé en ce que**
la section transversale extérieure de la barre (17) à l'emplacement axial et la section transversale intérieure du premier logement (21) du connecteur de serrage (15) sont adaptées l'une à l'autre de telle sorte que la rotation du connecteur de serrage (15) est limitée à une rotation jusque dans la position de déplacement dans laquelle la barre (17) est serrée dans le premier logement (21) du connecteur de serrage (15).

11. Dispositif de pesage selon l'une au moins des revendications précédentes,
**caractérisé en ce que**
la barre (17) est orientée horizontalement et/ou, lorsque la barre (17) est déplacée jusque dans la position de serrage, l'axe central du second logement (23) est orienté verticalement.

12. Dispositif de pesage selon l'une au moins des revendications précédentes,
**caractérisé en ce que**
le connecteur de serrage (15) est réalisé sous forme de connecteur de serrage en croix.

13. Dispositif de pesage selon l'une au moins des revendications précédentes,
**caractérisé en ce que**
il est prévu une vis de serrage (31) par laquelle les deux mâchoires de serrage (25) du premier logement (21) peuvent être serrées l'une contre l'autre, la vis de serrage (31) étant en particulier reliée solidairement à un levier de serrage (29).
